# EUROPEAN PATENT APPLICATION

(11) **EP 4 653 356 A1**
(43) Date of publication of application: **26.11.2025**
(21) Application number: 25177910.4
(22) Date of filing: 21.05.2025
(51) Int. Cl.: B65G 47/96, B65G 17/12

(54) **DEVICE FOR TRANSFERRING OBJECTS FOR ROLLER CONVEYORS**

(30) Priority: 22.05.2024 ES 202430945 U
(71) Applicant: SISTRONIC, SISTEMAS ELECTRICOS PARA SELECCION DE FRUTA, S.L., 12550 Almazora (Castellón) (ES)
(72) Inventor: BERNAT VILAR, Vicente Jose, 12550 Almazora (Castellón) (ES)
(74) Representative: Ungria López, Javier

(57) **Abstract**

The present invention relates to a device for transferring objects for roller conveyors. The device comprises rollers (2) that are moved in a forward direction, dragged by a drag chain (4) and which rotate about a central shaft (5); hinge elements (6) that allow the rollers (2) to tilt; steering elements (7) attached to each central shaft (5) and linked to a guide (8) along which they are moved and which has an increasing inclination in the forward direction of the drag belt (4). As the rollers (2) advance, the guide (8) forces a change of trajectory of the steering elements (7) which causes the rollers (2) to tilt causing the transfer of the objects (1) to a second conveyor.

## Description

### OBJECT OF THE INVENTION

The object of the invention is a system for transferring objects from a roller conveyor, also known as a yo-yo or diabolo conveyor, to another type of conveyor in a unitary and synchronised manner.

### BACKGROUND OF THE INVENTION

Roller conveyors are widely used and are particularly relevant for objects with spherical or ellipsoidal shapes (imperfect spheres). This is why they are mainly used in the agri-food sector to transport "spherical" fruit pieces.

Yo-yo conveyors are those that comprise at least two portions that can be motorised, usually by contact with a lower plane, allowing the object deposited on the conveyor to rotate. They allow objects to be moved and rotated at the same time. For this reason, they are widely used in sections where, simultaneously with the transport, a visual control (normally by means of artificial vision systems) of the objects is carried out in order to verify some of the external (aesthetic) characteristics thereof.

It is important to note that this type of conveyors are complex (e.g. compared to common conveyor belts) and are therefore only used in areas where operations are to be carried out simultaneously with the transfer of objects. Therefore, this type of conveyors are used for example in combination with visual inspection tools using machine vision.

When transferring objects from a roller conveyor to other types of conveyors, some devices are known, such as that which is disclosed in document ES2441228T3. This document proposes a roller conveyor mounted on a transport shaft by means of a joint, which, when the system detects that the object being transported is to be transferred, causes the same to be released and fall due to the effect of gravity or by means of other systems to an inclined position. Said inclined position will allow the object to be deposited in a storage point located on the side of the yo-yo conveyor.

Another example following a similar principle is ES2939390A1 where a conveyor module is used, comprising a concave assembly which houses the fruit and on the lower edge of which there are openings through which conical elements protrude and come into contact with the object being conveyed and cause same to rotate. In addition, the transport module is articulated, so that when it detects that the object on the conveyor must be transferred, it tips it over from the side to another conveyor or to a corresponding storage point.

Another system also used for a very similar purpose is that which is disclosed in document ES2180973T3 where a gripper conveyor is used to individually pick up each object from the roller conveyor to transfer the same to a cup in a synchronised manner. It is an extremely complex system and can cause the object to crush and/or fall if it is soft (ripe fruit).

The above proposals (except the last one) do not guarantee the free rotation of objects of different sizes and shapes. As these rollers are equipped with individual weighing and ejection mechanisms, they can interfere with the rotation, especially at small sizes, and therefore do not guarantee a free and homogeneous rotation of the objects for sequential image recording. The latter approach is extremely expensive, requires more space for transferring the object, and there is a possibility of the object falling (loss).

### DESCRIPTION OF THE INVENTION BY MEANS OF A PREFERRED EMBODIMENT

In order to solve the technical problems mentioned in the previous section, a technical solution has been developed that greatly simplifies the transfer of objects from a roller conveyor (yo-yo or diabolo conveyor) to another individual conveyor, preferably a cup-type conveyor, for subsequent weighing and distribution.

This is a transfer device specially designed to transfer ellipsoidal (or spherical) objects from a roller conveyor (yo-yo conveyor) to a conveyor of a different type, such as a cup conveyor, where the weighing of the object is simplified and the production capacity (speed) is also increased.

The system in which the device is installed comprises a roller conveyor equipped with a main conveyance element which is responsible for moving the rollers in a forward direction, while said rollers rotate around a central shaft (corresponding to each roller). The system comprises at least one transfer area, in which the device of the invention is located, and preferably comprises a prior area which is an inspection area in which the selection of objects can be carried out according to pre-established criteria. In the case of fruit, this selection can be done by size, by possible aesthetic peel defects, or other surface characteristics, etc.

At least one camera may be present in said machine vision inspection area. This means that it is not necessary to include weighing and ejection mechanisms in the transfer device. This improves the rotation of the objects on the rollers, especially if they are not completely spherical in shape. This is particularly important when conveying, for example, fruit with a leafy stalk, as it prevents the leaf from getting caught in said weighing and/or ejection mechanisms.

Thus, preferably, in the inspection area, the relevant characteristics being evaluated for each object are defined in the inspection area and subsequently the objects reach the transfer area.

In the transfer area there is a transfer device comprising a guide and steering elements (linked to the rollers on which the objects are moved) which together allow the trajectory (orientation and/or direction) of the rollers to be modified, forcing the same to tilt on a hinge element which causes the objects to be tipped (transfer) to the corresponding storage point or to a conveyor of another type. In other words, the shaft of the roller is in a horizontal position and is tilted with respect to the horizontal in order to tip the object.

Thus, where the transfer device is used in a fruit transport and transfer system, the fruit is sorted in a first inspection area, e.g. by defining the diameter and/or peel defect by means of computer means, and subsequently is laterally evacuated in a transfer area in which the device is located. This lateral evacuation takes place as a result of the rollers of the roller conveyor being tilted by the elements of the transfer device and more specifically by the interaction of the guide and the steering elements (cams). The steering elements are moved along the guide, which has an increasing inclination and an orientation, in its longitudinal direction, with a certain angular deviation with respect to the forward direction of the drag chain. Thus, as the steering elements move along the guide, they increase in height with respect to the drag chain and change their orientation. As the hinge elements are always kept in the same position relative to the drag chain, the rollers tilt about the point where they are attached to the hinge elements via their central shaft, causing the objects to be laterally evacuated. When fruit is to be transferred from a roller conveyor to a cup conveyor, these are linearly synchronised by mechanical or electrical means controlled by the system.

The present invention allows the transfer of objects from a roller conveyor to a cup conveyor in a very simple manner, much simpler than other known systems in the state of the art used for the same purpose.

### BRIEF DESCRIPTION OF THE FIGURES

To complete the description, and for the purpose of helping to make the features of the invention more readily understandable, this description is accompanied by a set of drawings constituting an integral part of the same, which by way of illustration and not limitation represents the following:
Figure 1 shows an overview of a transport and transfer system with an inspection area and a transfer area in which the transfer device of the invention is located.
Figure 2 shows a detail of the transfer device of the invention showing the configuration of the guide and the interaction between the guide and the steering elements that determines the position of the rollers.
Figures 3A-D show details of the different points A, B, C, D of the transfer area shown in figure 1, to show how the relative position of the rollers to the main transport element varies as the steering elements (cams) move along the guide.
Figures 4A-C depict a roller in different positions with respect to the drag chain to show how the roller tilts on the hinge element which is always kept in the same position with respect to the drag chain.
Figure 5 shows an elevation view of the roller conveyor and the device, showing how the position of the rollers varies along the roller path.

Below, a list is provided of the different elements represented in the figures making up the invention:
1: object; 2: rollers; 3: cups; 4: drag chain; 5: central shaft; 6: hinge element; 7: steering element; 8: guide; 8': first end of the guide; 8": second end of the guide; 9: transfer area; 10: inspection area; 11: chamber

### DESCRIPTION OF THE PREFERRED EMBODIMENT

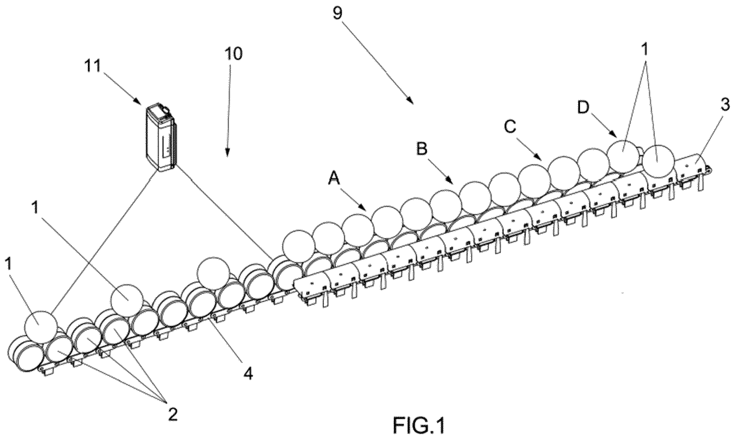

As can be seen in figure 1, the device of the present invention is a device for transferring objects (1) from a roller conveyor (2). In the case of the embodiment shown in figure 1, the objects (1) are transferred from the roller conveyor (2) to a cup conveyor (3) in a synchronised manner.

The roller conveyor (2) is of the type comprising a single frame clamped to a drag chain (4). The device comprises a plurality of rollers (2) configured to be moved, following a forward direction, dragged by the roller conveyor drag chain and, at the same time, rotate around a central shaft (5).

The device also comprises hinge elements (6), attached to one end of the central shaft (5) of each roller (2), such that the roller (2) can be tilted on said hinge element (6).

Also forming part of the device of the invention are steering elements (7) attached to the other end of the central shaft (5) of each roller (2) and linked to a guide (8) along which same are moved.

The guide (8) of the device has an increasing inclination, in a longitudinal direction of the guide, from a first end of the guide (8') to a second end of the guide (8") in the forward direction of the drag chain (4). In this way, as the rollers (2) advance on the drag chain (4), the configuration and orientation of the guide (8) force a change in the trajectory of the steering elements (7) which causes the rollers (2) to tilt around the hinge element (6), causing the transfer of the objects (1) that are arranged on top of the same. Preferably the guide (8) is of the trampoline type.

Preferably, in addition, the guide (8) has an orientation, in its longitudinal direction, with a certain angular deviation with respect to the forward direction of the drag chain (4).

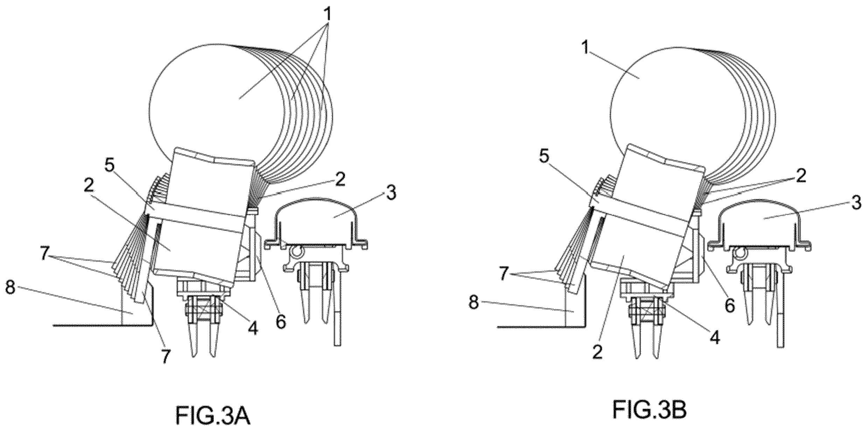

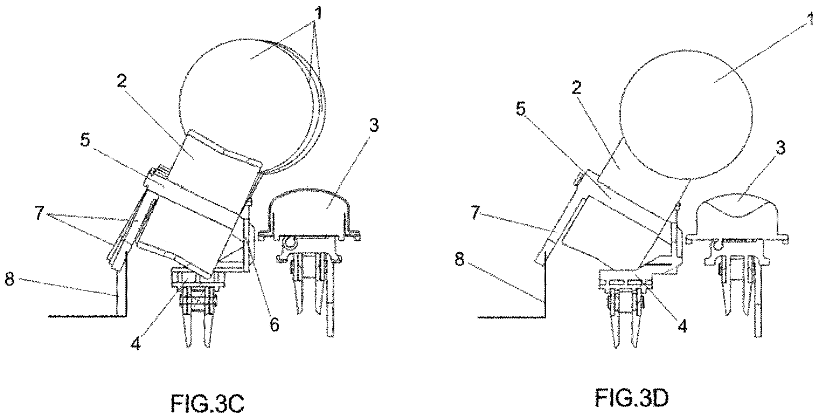

When the rollers (2) are in conveyance position, the central shaft (5) around which they rotate is arranged in a plane parallel to a plane in which the drag chain (4) is located and extends in a direction transverse to the forward direction of said drag chain (4). As can be seen in figure 3, as the steering elements (7) are moved along the guide (8) to transfer the objects (1), the orientation of the central shaft (5) changes.

More specifically, as the steering elements (7) increase in height with respect to the drag chain (4), due to the increasing inclination of the guide (8), it can be seen how the central shafts (5) of the rollers (2) move from being in a plane parallel to the plane in which the drag chain (4) moves and are inclined with respect to said plane, pivoting on the point where the hinge element (6) is located.

Also, as the steering elements (7) change their forward direction, following the orientation of the guide (8), i.e. changing their angular deviation with respect to the forward direction of the drag chain (4), they contribute to the pivoting of the rollers (2).

As shown in Figure 1, the device is intended to be installed in a transfer area (9) of a conveyance and transfer system. Preferably, prior to said area, there is an inspection area (10) in which a visual inspection of the objects (1) to be conveyed is carried out in order to select the same on the basis of predefined criteria. For example, when the invention is used in the agri-food sector, the objects (1) can be fruits that are visually inspected in the inspection area (10) to determine whether any of them have any surface defects and then, in the transfer area (9), when each fruit (object (1)) is transferred to a cup (3), to subsequently distribute the same according to size, peel defects or weight.

The roller elements (2) may have a biconical configuration to facilitate the reception of the objects (1) to be conveyed. Said roller elements (2) are arranged one after the other and are supported on the drag chain (4).

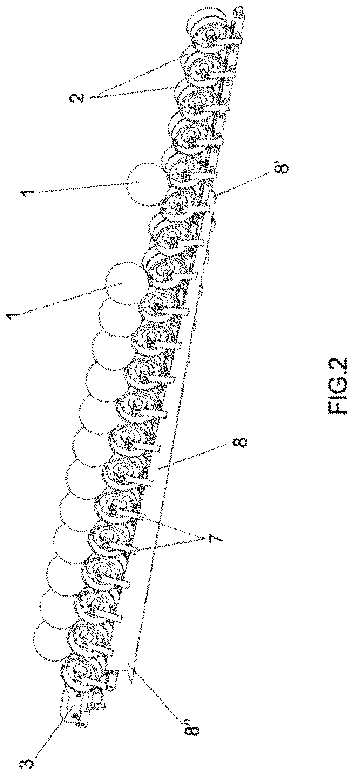

As can be seen in figure 2, the steering elements (7) act by way of a cam. Preferably these steering elements (7) are cams made of plastic material. The geometry of the guide (8), with increasing inclination, and the arrangement of the guide, at an oblique angle to the forward direction of the drag chain (4), cause that, as the transfer area (9) is traversed, the rollers (2) of the roller conveyor are inclined on the side opposite to that of the guide (8) and end up tipping the conveyed objects (1) onto the second conveyance line or the storage point.

In a preferred embodiment of the invention, the second conveyor is a cup conveyor and comprises a plurality of cups (3) configured to receive and house the objects, preferably one object in each cup in a synchronised manner. This second conveyor is also shown in the figures.

In one exemplary embodiment, the system in which the device is installed additionally comprises machine vision equipment with at least one camera (11) in the inspection area (10).

As previously described, this type of system is of particular interest when applied to convey spherical/ellipsoidal fruit as objects. In this case, the inspection area (10) is used, for example, to check for rotting of the fruit under test by inspecting the entire surface because, due to the rotation of the roller elements (2), the objects (1) (in this case the fruit) rotate as they move along the roller conveyor (yo-yo conveyor). If said visual inspection defines that a piece of fruit is in an "unacceptable" condition, the position of that piece of fruit is stored and, when said piece of fruit is subsequently transferred from the yo-yo conveyor to the cup conveyor, the "unacceptable" piece of fruit is discarded. Means for discarding the pieces of fruit that are in the cup conveyor are outside the scope of the present invention.

Figures 3A-D show details corresponding to the points A-D marked in figure 1 showing the position of each of the elements of the device with respect to the drag chain (4) of the system. The position of the objects (1) on the rollers (2) can also be seen. As can be seen, the points A-D have been chosen so that the sequential movement of the different elements as they move in the forward direction can be seen.

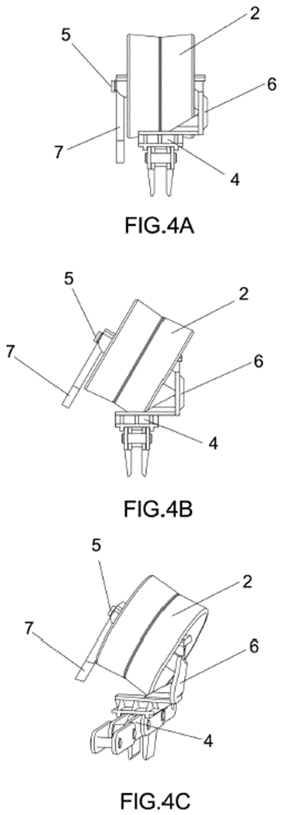

Figures 4A-C show the movement of a roller (2) which has been shown in isolation to more clearly represent the tilting movement. In figure 4A the roller (2) is in a position where the central shaft (5) is arranged parallel to the drag chain (4). As can be seen, in this position the steering element (7) is arranged transversely with respect to the central shaft (5) and to the drag chain (4). Figure 4B shows how the roller (2) has been tilted so that the steering element (7), which is perpendicular to the central shaft (5), is no longer perpendicular to the drag chain (4). It can be seen that the central shaft (5) is now inclined with respect to the drag chain (4) as it has tilted about the hinge element (6). Figure 4C shows the same position as in figure 4B from another perspective. Thus, as can be seen in said figures 4A-C, the rollers (2) are free of mechanisms in their radial portion, which is an advantage with respect to currently known solutions.

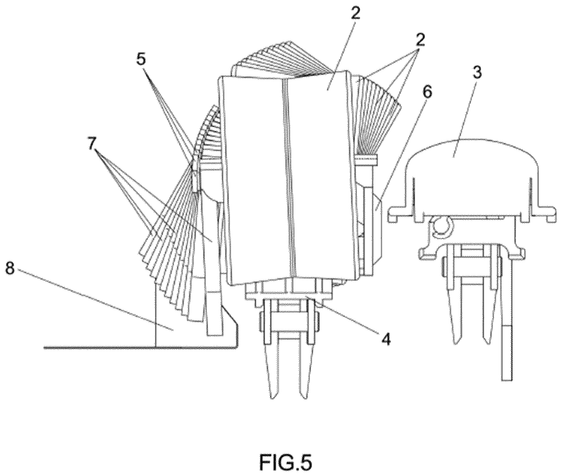

Figure 5 shows an elevation view of the roller conveyor and the device of the invention, showing the inclination and orientation of the guide (8) and how the steering elements (7), when moving in the longitudinal direction of the guide, force the rollers (2) to tilt on the hinge element (6).

Thus, the proposed device has many significant advantages over current state-of-the-art systems, providing a simple and compact solution for transferring objects from a roller conveyor to other types of conveyors (e.g. cup conveyors) or to storage points.

## Claims

1. A device for transferring objects (1) from a roller conveyor (2) of the type comprising a frame that is clamped to a drag chain (4), and the device is **characterised in that** it comprises:
- a plurality of rollers (2) configured to be moved, in a forward direction, driven by the drag chain (4) and, at the same time, rotate about a central shaft (5);
- hinge elements (6), attached to one end of the central shaft (5) of each roller (2), such that the roller (2) can be tilted on said hinge element (6) and the hinge element (6) is attached/linked to the frame;
- steering elements (7) attached to the other end of the central shaft (5) of each roller (2) and linked to a guide (8) along which same are moved;
- a guide (8) having an increasing inclination, in a longitudinal direction of the guide, from a first end of the guide (8') to a second end of the guide (8") in the forward direction of the drag chain (4);
so that, as the rollers (2) advance on the drag chain (4), the configuration and orientation of the guide (8) force a change in the trajectory of the steering elements (7) which causes the rollers (2) to tilt around the hinge element (6), causing the transfer of the objects (1) that are arranged on top of the same, in a synchronised manner, to a second cup conveyor (3) for subsequent weighing and distribution.

2. The device according to any one of the preceding claims, wherein the steering elements (7) are cams sliding on a guide (8) which is of the trampoline type.

3. The device according to any one of the preceding claims, wherein the guide (8) has an orientation, in its longitudinal direction, with a certain angular deviation with respect to the forward direction of the drag chain (4).

4. The device according to any one of the preceding claims, wherein the steering elements (7) are cams made of plastic material.
